# EUROPÄISCHE PATENTSCHRIFT

(11) **EP 2 658 290 B1**
(45) Veröffentlichungstag und Bekanntmachung des Hinweises auf die Patenterteilung: **18.04.2018**
(21) Anmeldenummer: 13164528.5
(22) Anmeldetag: 19.04.2013
(51) Int. Cl.: H04W 4/00, H04W 4/20, H04W 24/00, H04W 24/02, H04W 24/04, H04W 36/30

(54) **Sendeempfänger, Datenverarbeitungsvorrichtung, Verfahren zum Bereitstellen von Messinformation, Verfahren zum Bereitstellen von Information und Computerprogramm**
Transceiver, data processing apparatus, method for providing measurement information, method for providing information and computer program
Emetteur-récepteur, dispositif de traitement de données, procédé de mise à disposition d'informations de mesure, procédé de mise à disposition d'informations et programme informatique

(30) Priorität: 26.04.2012 DE 102012103694
(43) Veröffentlichungstag der Anmeldung: 30.10.2013
(73) Patentinhaber: Hochschule Merseburg (FH), 06217 Merseburg (DE)
(72) Erfinder: Mückenheim, Jens, Prof. Dr., 06217 Merseburg (DE)
(74) Vertreter: 2SPL Patentanwälte PartG mbB

(56) Entgegenhaltungen:
- EP-A1- 2 538 725
- EP-A2- 1 944 995
- US-A1- 2010 273 432

## Beschreibung

Ausführungsbeispiele der vorliegenden Erfindung liegen auf dem Gebiet der Maschine-zu-Maschine-Kommunikation, insbesondere im Zusammenspiel mit Mobilfunksystemen.

Die Maschine-zu-Maschine- (M2M-) Kommunikation wird eingesetzt zur Übertragung von Daten zwischen verschiedenen Endgeräten, ohne dass dabei eine menschliche Interaktion stattfindet. Anwendungen in diesem Bereich existieren beispielsweise in der Logistik, z. B. Warenhaltung, Warenverfolgung, etc., oder im Maschinenbau, z. B. Ferndiagnose und Fernwartung. Darüber hinaus sind Entwicklungsaktivitäten bekannt, die sich mit M2M-Kommunikation in Bereichen wie Telemedizin, Energieverwaltung, z. B. Smart Metering/Smart Grid, Mobilität, z.B. E-Mobilität, Car-to-X, etc., befassen, vgl. VDE-Positionspapier: "M2M - Maschine-zu-Maschine-Kommunikation", Frankfurt, Februar 2011.

Konventionelle Anwendungen umfassen beispielsweise stationäre Installationen der M2M-Komponenten, wie z. B. in Verbrauchszählern, Verkaufsautomaten, bei der Maschinenfernwartung, usw. Viele dieser M2M-Anwendungen verwenden eine Kommunikation über Mobilfunk, welche es neben dem Wegfall der Notwendigkeit einer festen Kommunikationsanbindung erlaubt, eine Nachrichtenverbindung selbst in sonst nicht erreichbaren Gebieten zu erbringen.

Hierbei kann es problematisch sein, dass es selbst bei stationären Installationen der M2M-Mobilfünkkomponenten zu Schwankungen der Funkversorgungsqualität kommen kann. Ein Beispiel hierfür ist die so genannte Zellatmung, welche insbesondere bei Code Division Multiple Access (CDMA-) Netzen auftritt. Es handelt sich hierbei um Schwankungen im Abdeckungsbereich des Mobilfunknetzes, wobei dieser Effekt auf der Abhängigkeit der Mobilfunkstörungen (Interferenz) von der jeweiligen Nutzerverkehrssituation beruht. Insofern kann es problematisch sein, dass es auch zu Schwankungen in der Empfangsqualität an selbst stationären Empfängern kommen kann. Dies kann zur Folge haben, dass sich die Versorgungsbereiche der einzelnen Funkzellen dynamisch ändern, welches zur Notwendigkeit der Übergabe der Funkverbindung zwischen verschiedenen Mobilfunkbasisstationen (hand over) auch für stationäre Anwendungen führt. In extremen Fällen kann es zu einem temporären Ausfall der Funkversorgung oder Abdeckung am Standort der M2M-Anwendung kommen. Die genannten Effekte können auch dadurch verstärkt werden, dass sich sehr oft die M2M-Funkmodule an Orten mit ohnehin schlechter Funkversorgung befinden, wie beispielsweise Verbrauchszähler im Untergeschoss oder im Keller von Gebäuden.

Details oder spezifische Eigenschaften von Mobilfunkumgebungen und daher einhergehende Auswirkungen auf M2M-Anwendungen können in J. Mückenheim, K.-H. Gabler: "M2M-Kommunikation in zellulären Mobilfunknetzen", 16. ITG Fachtagung Mobilkommunikation, Osnabrück, Mai 2011, gefunden werden. Weiterhin wurden dort verschiedene Ansätze zur Analyse und Behebung möglicher Übertragungsprobleme vorgestellt.

Die Druckschrift US 2011/0116479 A1 beschreibt Techniken zur dynamischen Verwaltung von Schnurlos-Verbindungen. Zum Beispiel umfasst eine mobile Rechenvorrichtung ein Verwaltungsmodul, um dynamisch aus einer Vielzahl von Zugriffstechnologien eine Zugriffstechnologie auszuwählen, um eine Verbindung mit einer Zielvorrichtung über die ausgewählte Zugriffstechnologie zu initiieren.

Das Dokument EP 2 282 602 B1 befasst sich mit einem Verfahren, das das Sammeln von Informationen über die Topologie eines Funknetzes umfasst und dabei die Last einer jeden drahtlosen Teilnehmereinrichtung betrachtet. Eine Simulation des Funknetzwerks auf der Grundlage der gesammelten Informationen liefert dann Optimierungsdaten für das Funknetz.

Die Druckschrift US 2008/0076450 A1 offenbart ein Konzept, das drahtlose Geräte nutzt, um Sensor-Netzwerke zu implementieren. Zur Realisierung von kognitiven Empfängern führt ein drahtloses Gerät Messungen für ein erstes System (z.B. ein Rundfunk-System) durch, mit dem das Gerät jedoch nicht kommuniziert. Das drahtlose Gerät sendet die Messungen und zugehörigen Ortsinformationen und/oder Zeitstempel an ein zweites System (z.B. ein zellulares System). Ein Server empfängt Messungen von einer Mehrzahl von drahtlosen Geräten und bestimmt die Abdeckung des ersten Systems auf der Grundlage der Messungen.

Die Druckschrift EP2538725 offenbart eine Basisstation die Messungen für ein Mobilfunkgerät konfiguriert. Dabei können Signale einer Zelle, der das Mobilfunkgerät zugeordnet ist, und Signale von Nachbarzellen vermessen werden.

Die Druckschrift EP 1 944 995 A2 beschreibt ein Konzept zur Konfiguration von Sendeunterbrechungen zwischen mehreren Mobilfunkgeräten und einer Basisstation in einem Mobilfunksystem. Darüber hinaus werden Schwellwerte kommuniziert, auf deren Basis dann Ereignisse ausgelöst werden, die zu einer Kommunikation von Messresultaten an eine Basisstation führen.

Die Druckschrift US 2010/0273432 A1 beschreibt ein Konzept zur Leistungsanpassung einer Femtozelle in einer heterogenen Netzwerkstruktur.

Es ist daher die Aufgabe der vorliegenden Erfindung, ein verbessertes Konzept für eine Maschine-zu-Maschine-Kommunikation unter Verwendung eines Mobilfunknetzes zu schaffen.

Diese Aufgabe wird gelöst gemäß den anhängigen unabhängigen Ansprüchen.

Ausführungsbeispiele basieren auf der Erkenntnis, dass sich Mobilfunknetze oder Mobilfunksysteme prinzipiell für M2M-Anwendungen eignen. Insbesondere in Mitteleuropa ermöglicht die nahezu flächendeckende Funkversorgung eine Installation von M2M-Endgeräten selbst an solchen Orten, welche mit anderen Technologien nicht oder nur sehr schwer erreichbar wären.

Ausführungsbeispiele der vorliegenden Erfindung basieren ferner auf der Erkenntnis, dass es wichtig sein kann, beim Design einer spezifischen M2M-Anwendung den Einfluss der Mobilfunkumgebung am späteren Einsatzort zu berücksichtigen.

Ausführungsbeispiele basieren ferner auf der Erkenntnis, dass die Probleme, die eine schwankende Abdeckung des Mobilfunksystems mit sich bringt, durch eine Neuaussendung einer M2M-Meldung nur vordergründig gelöst werden können. Beispielsweise können M2M-Daten über einen Kurznachrichtendienst, auch engl. Short-Message-Service (SMS), versendet werden. Kommt es zu einem Übertragungsfehler, so können weitere SMS versendet werden. Dieser Mechanismus kann auch durch den Mobilfunkstandard selbst vorgegeben werden. Falls die Daten über Paketdatendienste, wie beispielsweise General Packet Radio Service (GPRS), verwendet werden, können auch Mechanismen des Funkstandards genutzt werden, welche Neuaussendungen oder wiederholte Transmissionen bei Übertragungsfehlern autonom starten. Hierbei kann eine separate Kommunikation zwischen Mobilfunkmodul und M2M-Anwendung ausbleiben. Es ist daher eine weitere Erkenntnis, dass hierbei eine ineffiziente Steuerung der Kommunikationsversuche vorkommen kann, da im ersten Fall die Anwendung keine Kenntnis darüber hat, wann eine erfolgreiche Übertragung möglich wäre bzw. im zweiten Fall das Funkmodul versucht, eine Meldung zu versenden, welche unter Umständen veraltet ist. Dies tritt insbesondere dann auf, wenn die Daten von dem Funkmodul zwar empfangen, nicht aber an das Mobilfunknetz übermittelt werden können. Je nach Funkstandard kann es dann vorkommen, dass das Funkmodul autonom versucht, die Daten immer wieder erneut zu senden, sodass diese gegebenenfalls veraltet sind, wenn sie den eigentlichen Empfänger erreichen.

Ausführungsbeispiele der vorliegenden Erfindung basieren ferner auf der Erkenntnis, dass eine Ausfallsicherung für ein Mobilfunksystem durch Kommunikation über mehrere Mobilfunknetzbetreiber realisiert werden kann. In anderen Worten könnte im Falle eines Ausfalls einer Funkverbindung mit einem Netzbetreiber eine alternative Verbindung über einen anderen Netzbetreiber aufgebaut werden. Hiermit lassen sich Abdeckungsprobleme umgehen, welche bei einem bestimmten Netzbetreiber auftreten, beispielsweise bei einem Ausfall einer Verbindung bzw. einzelner Netzelemente im Netz des Betreibers. Es ist eine weitere Erkenntnis, dass diese Lösung vertragliche Vereinbarungen mit mehreren Netzanbietern erfordert, sowie das Vorsehen entsprechender Hardware, wie beispielsweise entsprechende Nutzeridentifikationsmodule, auch engl. Subscriber Identity Modules (SIM-Karten). Dies kann zu höheren Kosten für den M2M-Anwender führen. Darüber hinaus wurde erkannt, dass diese Methode nicht unbedingt bei Problemen mit der Funkanbindung hilft, da sehr oft verschiedene Betreiber die gleichen Antennenstandorte benutzen und damit ähnliche Funkbedingungen vorherrschen, d. h. es kommt häufig zu gleichzeitigen Ausfällen oder Abdeckungsengpässen mehrerer Netze.

Ausführungsbeispiele der vorliegenden Erfindung beruhen daher auf dem Kerngedanken, dass eine Verbindung zwischen einem Funkmodul, wie beispielsweise einem Sendeempfänger, und einer M2M-Anwendung, wie beispielsweise einer Datenverarbeitungseinrichtung, mit einer entsprechenden Aufgabenteilung erfolgen kann. Insbesondere können Ausführungsbeispiele von der Erkenntnis Gebrauch machen, dass ein Funkmodul, wie beispielsweise ein Sendeempfänger, interne Messungen der Signalqualität des Mobilfunknetzes durchführen kann, und der M2M-Anwendung, d. h. der Datenverarbeitungseinrichtung, zur Verfügung stellen kann. Darüber hinaus kann die M2M-Anwendung, d. h. die Datenverarbeitungseinrichtung, die Messergebnisse auswerten und nur dann einen Kommunikationsversuch starten, wenn vorher eine ausreichende Signalqualität gemessen wurde, d. h. wenn vorher sichergestellt wurde, dass eine Datenübertragung und eine Kommunikation zum Mobilfunknetz generell möglich ist.

Ausführungsbeispiele schaffen daher einen Sendeempfänger zum Bereitstellen von Messinformationen aus einem Mobilfunksystem. Das Mobilfunksystem kann beispielsweise einem der Mobilfunksysteme entsprechen, die von entsprechenden Standardisierungsgremien, wie z.B. der 3rd Generation Partnership Project (3GPP)-Gruppe, standardisiert werden. Beispielsweise umfassen diese das Global System for Mobile Communications (GSM), Enhanced Data Rates for GSM Evolution (EDGE), GSM EDGE Radio Access Network (GERAN), das Universal Terrestrial Radio Access Network (UTRAN) oder das Evolved UTRAN (E-UTRAN), wie z. B. das Universal Mobile Telecommunication System (UMTS), Long Term Evolution (LTE) oder LTE-Advanced (LTE-A), oder auch Mobilfunksysteme anderer Standards, wie z. B. das Worldwide Interoperability for Microwave Access (WIMAX), IEEE802.16 oder Wireless Local Area Network (WLAN), IEEE802.11, sowie generell ein System, das auf einem Zeitbereichsvielfachzugriffsverfahren (Time Division Multiple Access (TDMA)), Frequenzbereichsvielfachzugriffsverfahren (Frequency Division Multiple Access (FDMA)), Kodebereichsvielfachzugriffsverfahren (Code Division Multiple Access (CDMA)), Orthogonalen Frequenzbereichsvielfachzugriffsverfahren (Orthogonal Frequency Division Multiple Access (OFDMA)) oder einer anderen Technologie bzw. Vielfachzugriffverfahren basiert. Im Folgenden werden die Begriffe Mobilfunksystem, Mobilfunknetz und Mobilfunknetzwerk synonym benutzt.

Im Folgenden wird angenommen, dass ein solches Mobilfunksystem zumindest einen stationären Sendeempfänger im Sinne einer Basisstation umfasst, der über Anbindung an den leitungsgebundenen Teil des Mobilfunknetzes verfügt. Auf der anderen Seite wird davon ausgegangen, dass das Mobilfunknetz zumindest einen mobilen Sendeempfänger umfasst, wobei sich der Begriff mobil hier darauf beziehen soll, dass mit diesem Sendeempfänger über die Luftschnittstelle, d. h. kabellos, kommuniziert wird. Ein solcher mobiler Sendeempfänger kann beispielsweise einem tragbaren Telefon, einem tragbaren Computer oder einem Funkmodul entsprechen, das nicht zwingend mobil in dem Sinne ist, als dass es sich tatsächlich bewegt. Insbesondere bei den hier betrachteten M2M-Anwendungen kann der mobile Sendeempfänger auch stationär sein, mit dem Mobilfunknetz jedoch drahtlos kommunizieren. Insofern kann die bereits erwähnte Basisstation einer Basisstation einem der oben erwähnten Standards entsprechen, beispielsweise einer NodeB, einer eNodeB, usw.

Der Sendeempfänger umfasst eine erste Schnittstelle zur Kommunikation mit dem Mobilfunksystem. Diese Schnittstelle kann einer Luftschnittstelle entsprechen, die zur schnurlosen Kommunikation mit einem der oben genannten Mobilfunksysteme geeignet ist. Darüber hinaus umfasst der Sendeempfänger eine zweite Schnittstelle zur Kommunikation mit einer Datenverarbeitungseinrichtung, die der M2M-Anwendung entsprechen kann. In diesem Zusammenhang kann die Datenverarbeitungseinrichtung auch einem Datenaggregator oder einer Datenvorverarbeitungseinrichtung entsprechen. Die zweite Schnittstelle des Sendeempfängers ermöglicht den Empfang einer Information über eine Messkonfiguration von der Datenverarbeitungseinrichtung. In anderen Worten dient die zweite Schnittstelle dazu, von der Datenverarbeitungseinrichtung eine Messkonfiguration zu empfangen, die sich auf Messungen in dem Mobilfunksystem bezieht. Der Sendeempfänger umfasst ferner eine Messeinrichtung zum Durchführen einer Messung in dem Mobilfunksystem, basierend auf der Information über die Messkonfiguration und zum Bestimmen der Messinformation basierend auf der Messung. Darüber hinaus ist die zweite Schnittstelle ferner ausgebildet, um der Datenverarbeitungseinrichtung die Messinformation bereitzustellen.

Ausführungsbeispiele können daher einen Sendeempfänger schaffen, der in der Lage ist, mit einem Mobilfunksystem zu kommunizieren, und der gleichzeitig von einer Datenverarbeitungseinrichtung, die einer M2M-Anwendung entsprechen kann, eine Messkonfiguration zu erhalten. Basierend auf dieser Messkonfiguration kann der Sendeempfänger dann Messungen in dem Mobilfunknetz, d. h. Messungen basierend auf den Signalen des Mobilfunksystems, durchführen, und etwaige Messergebnisse der Datenverarbeitungseinrichtung zur Verfügung stellen. Die Datenverarbeitungseinrichtung wird daher in die Lage versetzt, festzustellen, ob eine Übertragung in dem Mobilfunknetz überhaupt möglich ist, bzw. wie die Übertragungsqualität in dem Mobilfunknetz gerade aussieht.

Ausführungsbeispiele schaffen daher auch eine Datenverarbeitungsvorrichtung zum Bereitstellen einer Information über eine Messkonfiguration zur Messung von Signalen eines Mobilfunksystems. Die Datenverarbeitungsvorrichtung kann beispielsweise einer M2M-Anwendung entsprechen. Die Datenverarbeitungsvorrichtung umfasst eine Schnittstelle zur Kommunikation mit einem Sendeempfänger für das Mobilfunksystem. Darüber hinaus umfasst die Datenverarbeitungsvorrichtung eine Kontrolleinrichtung zur Bestimmung einer Information über eine Messkonfiguration für den Sendeempfänger. Die Schnittstelle zur Kommunikation mit dem Sendeempfänger ist ferner ausgebildet, um dem Sendeempfänger die Information über die Messkonfiguration bereitzustellen.

Insofern schaffen Ausführungsbeispiele einen Sendeempfänger, der Messungen in einem Mobilfunksystem durchführt, wobei die Messungen über eine Datenverarbeitungsvorrichtung konfiguriert werden können. Die Datenverarbeitungsvorrichtung kann dabei einer M2M-Anwendung entsprechen, wie beispielsweise einem Verbrauchszähler, einem Verkaufsautomaten oder einer ferngewarteten Maschine.

In Ausführungsbeispielen kann die Datenverarbeitungsvorrichtung, d.h. die M2M-Anwendung, beispielsweise der Aufnahme von Messwerten oder Verbrauchswerten dienen, die über eine unidirektionale Verbindung zwischen dem Sendeempfänger, der z.B. als M2M-Modul realisiert sein kann, zu einer Zentrale zur Datenauswertung übermittelt werden. Ausführungsbeispiele können daher auch ein System schaffen, das einen Sendeempfänger und eine Datenverarbeitungsvorrichtung umfasst. Die Datenverarbeitungsvorrichtung bzw. das System können eine sogenannte "Metering"-Anwendung zum Erfassen von Verbrauchswerten realisieren, wie z.B. in einem Verbrauchszähler für Gas, Wasser, Wärme, Strom, usw. Die Datenverarbeitungseinrichtung kann zum Versand der Verbrauchsdaten in gewissen Zeitabständen, beispielsweise zu Abrechnungszwecken, ausgebildet sein. Ausführungsbeispiele können auch im Bereich der Telemedizin eingesetzt werden. Hier kann beispielsweise die Überwachung, sogenanntes "Monitoring", von Vitaldaten z.B. Blutdruck, Blutzucker, Puls, usw. erfolgen. Die Datenverarbeitungseinrichtung, bzw. das System, kann z.B. als Datenaggregator verwendet werden, welcher von Zeit zu Zeit die gesammelten Daten zur Auswertung, z.B. zu einem Arzt oder Krankenhaus, weiterleitet.

Darüber hinaus können Ausführungsbeispiele bei der Überwachung vom Umweltdaten, sogenanntes "Umweltmonitoring", eingesetzt werden. Die Datenverarbeitungseinrichtung kann dann der Aufnahme verschiedener Messwerte, z.B. Temperatur, Feuchtigkeit, Wind, Luftverschmutzung, usw. dienen. Ausführungsbeispiele der Datenverarbeitungsvorrichtung können dann als Datenaggregators verwendet werden, der zu gewissen Zeiten über den Sendeempfänger gesammelte oder einzelne Daten an eine Zentrale übermittelt. Ein weiterer Einsatzbereich von Ausführungsbeispielen kann die Zustandsüberwachung sein. Hierbei können Ausführungsbeispiele eine unidirektionale Verbindung über den Sendeempfänger, d.h. ein M2M-Modul, zu einer Zentrale realisieren. Ausführungsbeispiele können beispielsweise in Verkaufsautomaten eine Kühlung oder einen Füllstand überwachen und können weiterhin in vielerlei Maschinen oder Geräten, wie z.B. Drucker, Heizung, Maschinen im Betrieb, Solaranalagen, Windkraftanlagen, usw., eingesetzt werden. Somit kann eine Fernüberwachung von Betriebsparametern bzw. Betriebsmitteln, z.B. von Tonern bei Druckern, Wasserstände in Heizungen, usw., realisiert werden.

Ausführungsbeispiele können darüber hinaus bei der Steuerung von Maschinen und Systemen, z.B. zur Fernsteuerung und Automatisierung, eingesetzt werden. Hierbei kann über den Sendeempfänger auch eine bidirektionale Kommunikation realisiert werden, die zumindest teilweise zeittolerant ausgelegt sein kann und z.B. Verzögerung von einigen Minuten toleriert werden können. Beispielsweise können Ausführungsbeispiele so in der Gebäudetechnik, beispielsweise bei der Klimasteuerung, Energiesteuerung oder zur Aktivierung von Geräten aus der Ferne, eingesetzt werden. Ein weiteres Einsatzgebiet kann die Fernwartung von Maschinen sein. Ausführungsbeispiele können hier eine Ferndiagnose mit Übertragung von Steuerbefehlen im Fehlerfall ermöglichen.

Generell können Ausführungsbeispiele eine Datenübertragung zu einer Maschine oder zu einem Gerät über eine unidirektionale oder eine bidirektionale Verbindung von einer Zentrale zum M2M-Modul, bzw. zur Datenverarbeitungsvorrichtung, realisieren. In manchen Anwendungsfällen kann der Zeitpunkt einer solchen Datenübertragung unkritisch sein. Dies kann beispielsweise bei Softwareaktualisierungen vorkommen, aber auch bei der Übertragung von Werbeinhalten z.B. zu einer Werbetafel oder einem Display eines Verkaufsautomaten.

Ausführungsbeispiele können daher den Vorteil liefern, dass eine M2M-Anwendung, d. h. die Datenverarbeitungseinrichtung, Messungen an dem Sendeempfänger konfigurieren kann, sodass hierbei Informationen über die Übertragungsqualität in dem Mobilfunknetz verfügbar gemacht werden können, bevor eine eigentliche Datenübertragung stattfindet.

In Ausführungsbeispielen kann die zweite Schnittstelle des Sendeempfängers ferner ausgebildet sein, um auf Anfrage der Datenverarbeitungseinrichtung Daten von der Datenverarbeitungseinrichtung zu empfangen und über die erste Schnittstelle an das Mobilfunknetz zu senden. In anderen Worten ist der Sendeempfänger zur Durchführung der Messungen basierend auf der Messkonfiguration von der Datenverarbeitungseinrichtung angepasst und darüber hinaus ausgebildet, um, sofern die Datenverarbeitungseinrichtung dies anzeigt, Daten von der Datenverarbeitungseinrichtung an das Mobilfunknetz und damit an einen etwaigen Empfänger weiterzuleiten.

Auf der Seite der Datenverarbeitungsvorrichtung kann die Schnittstelle zur Kommunikation mit dem Sendeempfänger in Ausführungsbeispielen ausgebildet sein, um entsprechend eine Information über ein Messergebnis von dem Sendeempfänger zu erhalten und dem Sendeempfänger Daten zur Weiterleitung an das Mobilfunknetz bereitzustellen. Die Kontrolleinrichtung kann ausgebildet sein, um die Information über das Messergebnis auszuwerten und festzustellen, ob ein Qualitätskriterium für eine Kommunikation zwischen dem Sendeempfänger und dem Mobilfunknetz erfüllt ist. Zum Beispiel können hier verschiedene Signale des Mobilfunknetzes durch den Sendeempfänger gemessen werden. Hierbei kommen beispielsweise Referenzsignale oder so genannte Pilotsignale in Frage. Für das Qualitätskriterium selbst kommen ebenfalls mehrere Varianten in Frage. Beispielsweise kann eine absolute Empfangsleistung dieser Signale gemessen werden. In anderen Ausführungsbeispielen kann ein Signal-zu-Rausch-Verhältnis oder ein Signal-zu-Rausch-und-Interferenz-Verhältnis bestimmt werden. In Ausführungsbeispielen kann die Kontrolleinrichtung ferner ausgebildet sein, um dem Sendeempfänger die Daten zur Weiterleitung bereitzustellen, wenn das Qualitätskriterium erfüllt ist.

In Ausführungsbeispielen kann die Kommunikation zwischen dem Sendeempfänger und der Datenverarbeitungsvorrichtung ebenfalls schnurlos erfolgen, beispielsweise über WLAN oder Bluetooth oder einen anderen Schnurlosstandard. Demzufolge kann die zweite Schnittstelle des Sendeempfängers zur schnurlosen Kommunikation ausgebildet sein, ebenso wie die Schnittstelle der Datenverarbeitungsvorrichtung. In anderen Ausführungsbeispielen können diese aber auch leitungsgebunden kommunizieren. Hierbei kommen beliebige Verbindungen zur Datenkommunikation in Betracht.

In anderen Worten kann die Datenverarbeitungsvorrichtung in solchen Ausführungsbeispielen ausgebildet sein, um zunächst über die Messergebnisse festzustellen, ob eine Übertragung der Daten in dem Mobilfunknetz möglich ist. Wenn die Übertragung möglich ist, so kann die Datenverarbeitungsvorrichtung ausgebildet sein, um die Daten dem Sendeempfänger zur Übertragung zur Verfügung zu stellen.

In weiteren Ausführungsbeispielen kann die Kontrolleinrichtung ausgebildet sein, um die Bereitstellung der Daten an den Sendeempfänger bei nicht erfülltem Qualitätskriterium zurückzustellen, bis das Qualitätskriterium erfüllt ist. In anderen Worten kann in einem solchen Ausführungsbeispiel ein Übertragungsversuch durch den Sendeempfänger vermieden werden, wenn von vornherein festgestellt wurde, dass die Übertragungsqualität schlecht ist, bzw. eine Übertragung aussichtslos ist.

In Ausführungsbeispielen kann die Information über die Messkonfiguration ferner Information über eine Art der Bereitstellung der Messinformation umfassen. Die Information über die Art der Bereitstellung kann angeben, ob eine Bereitstellung basierend auf einem Zeitablauf oder basierend auf einem Messergebnis erfolgt. In anderen Worten kann die Messkonfiguration eine Information darüber enthalten, wie die Messergebnisse von dem Sendeempfänger an die Datenverarbeitungsvorrichtung mitgeteilt werden sollen. In einigen Ausführungsbeispielen kann dies periodisch geschehen, d. h. in regelmäßigen Abständen. In anderen Ausführungsbeispielen kann die Übertragung der Messergebnisse auch ereignisbasiert erfolgen, d. h. ein Messergebnis wird nur dann von dem Sendeempfänger an die Datenverarbeitungsvorrichtung übertragen, wenn ein bestimmtes Kriterium von der Messung selbst erfüllt wird, beispielsweise wenn das Qualitätskriterium erfüllt wird.

Ausführungsbeispiele können demnach den Vorteil bieten, dass ein Sendeempfänger von der Datenverarbeitungsvorrichtung derart konfiguriert wird, dass dieser Messungen in dem Mobilfunknetz durchführt und Messergebnisse an die Datenverarbeitungsvorrichtung übermittelt, sobald ein Qualitätskriterium erfüllt ist, d. h. sobald eine Übertragung der Daten möglich ist. Die Datenverarbeitungsvorrichtung kann diesen Zeitpunkt, d. h. dieses Messergebnis abwarten, und dann die Daten zur Weiterleitung an den Sendeempfänger übertragen. Insgesamt können Ausführungsbeispiele so den Vorteil bieten, dass die Erfolgswahrscheinlichkeit für eine erfolgreiche Übertragung der Daten durch das Mobilfunknetz wesentlich erhöht wird.

In Ausführungsbeispielen kann der Sendeempfänger auch angepasst sein, um über die erste Schnittstelle von dem Mobilfunksystem eine Information über eine weitere Messkonfiguration zu erhalten. Die Messeinrichtung kann dann angepasst sein, um basierend auf der Information über die weitere Messkonfiguration eine Messung in dem Mobilfunknetz durchzuführen. In anderen Worten kann der Sendeempfänger eine Messkonfiguration aus dem Mobilfunknetz erhalten, um entsprechend Messungen an den Signalen des Mobilfunksystems durchzuführen, und entsprechend Messergebnisse an das Mobilfunksystem mitzuteilen. Diese Messungen können beispielsweise dazu verwendet werden, den Sendeempfänger einer bestimmten Zelle des Mobilfunksystems zuzuordnen. In einem solchen Ausführungsbeispiel ist der Sendeempfänger demnach angepasst, um sowohl von dem Mobilfunknetz als auch von der Datenverarbeitungsvorrichtung Messkonfigurationen zu empfangen. In einigen Ausführungsbeispielen können sich diese Messkonfigurationen auch überlappen, bzw. die Messkonfiguration, die von der Datenverarbeitungsvorrichtung zur Verfügung gestellt wird, kann sich auf Messkonfigurationen aus dem Mobilfunksystem beziehen. In anderen Worten kann die Datenverarbeitungsvorrichtung dem Sendeempfänger per Messkonfiguration anzeigen, dass diese an bestimmten Messergebnissen, die bereits von dem Mobilfunksystem konfiguriert wurden, interessiert ist und solche Messergebnisse übermittelt haben möchte. Die Information über die Messkonfiguration kann insofern auch einen Bezug auf eine Messung enthalten, die bereits von dem Mobilfunksystem konfiguriert wurde, bzw. einen Bezug auf eine Messung enthalten, die vorkonfiguriert wurde. In einem solchen Ausführungsbeispiel kann die Information über die Messkonfiguration eine Art Platzhalter für eine vorbekannte oder vordefinierte Messkonfiguration aufweisen.

Ausführungsbeispiele schaffen ferner ein Verfahren zum Bereitstellen von Messinformation aus einem Mobilfunksystem mit Empfangen einer Information über eine Messkonfiguration von einer Datenverarbeitungseinrichtung. Das Verfahren umfasst ferner Durchführen einer Messung in dem Mobilfunksystem basierend auf der Information über die Messkonfiguration und Bestimmen der Messinformation basierend auf der Messung. Das Verfahren umfasst ferner Bereitstellen der Messinformation an die Datenverarbeitungseinrichtung.

Ausführungsbeispiele schaffen ferner ein Verfahren zum Bereitstellen einer Information über eine Messkonfiguration zur Messung von Signalen eines Mobilfunksystems. Das Verfahren umfasst Kommunizieren mit einem Sendeempfänger für das Mobilfunksystem und Bestimmen einer Information über eine Messkonfiguration für einen Sendeempfänger. Das Verfahren umfasst ferner Bereitstellen der Information über die Messkonfiguration an den Sendeempfänger.

Ausführungsbeispiele schaffen ferner ein Computerprogramm mit einem Programmcode zur Durchführung eines der Verfahren gemäß der obigen Beschreibung, wenn der Programmcode auf einem Computer, einem Prozessor oder einer programmierbaren Hardwarekomponente ausgeführt wird.

Weitere vorteilhafte Ausgestaltungen werden nachfolgend anhand von in den Zeichnungen dargestellten Ausführungsbeispielen, auf welche Ausführungsbeispiele jedoch nicht insgesamt beschränkt sind, näher beschrieben. Es zeigen:
- Fig. 1: ein Ausführungsbeispiel eines Sendeempfängers und ein Ausführungsbeispiel einer Datenverarbeitungsvorrichtung in einem Mobilfunksystem;
- Fig. 2: einen Ablauf einer Kommunikation zwischen einem Funkmodul und einer M2M-Anwendung in einem Ausführungsbeispiel;
- Fig. 3: ein Blockschaltbild eines Ablaufdiagramms eines Ausführungsbeispiels eines Verfahrens; und
- Fig. 4: ein Blockschaltbild eines Ablaufdiagramms eines Ausführungsbeispiels eines weiteren Verfahrens.

Bei der nachfolgenden Beschreibung der beigefügten Figuren, die Ausführungsbeispiele zeigen, bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

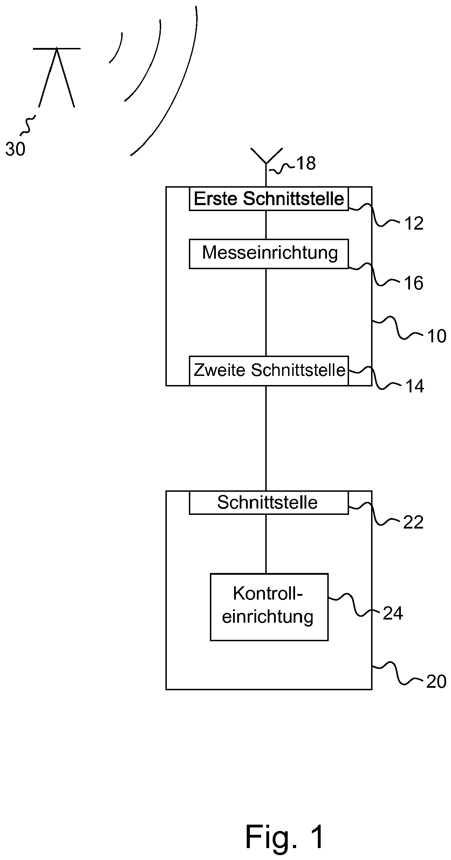

Die Fig. 1 zeigt einen Sendeempfänger 10 zum Bereitstellen von Messinformationen aus einem Mobilfunksystem 30. Das Mobilfunksystem 30 ist in der Fig. 1 als Basisstation dargestellt, die beispielsweise zu einem UMTS- oder einem LTE-System gehören kann. Wie die Fig. 1 zeigt, umfasst der Sendeempfänger 10 eine erste Schnittstelle 12 zur Kommunikation mit dem Mobilfunksystem 30. Die Kommunikation mit dem Mobilfunksystem 30 ist in der Fig. 1 symbolisch durch eine Antenne 18 dargestellt. Der Sendeempfänger umfasst ferner eine zweite Schnittstelle 14 zur Kommunikation mit einer Datenverarbeitungseinrichtung 20 und zum Empfang einer Information über eine Messkonfiguration von der Datenverarbeitungseinrichtung 20. Darüber hinaus umfasst der Sendeempfänger eine Messeinrichtung 16 zum Durchführen einer Messung in dem Mobilfunksystem 30 basierend auf der Information über die Messkonfiguration und zum Bestimmen der Messinformation basierend auf der Messung. Die zweite Schnittstelle 14 ist ferner ausgebildet, um der Datenverarbeitungseinrichtung 20 die Messinformation bereitzustellen. Wie die Fig. 1 zeigt, sind die erste Schnittstelle 12 und die zweite Schnittstelle 14 mit der Messeinrichtung 16 gekoppelt.

Die Fig.1 zeigt darüber hinaus ein Ausführungsbeispiel einer Datenverarbeitungsvorrichtung 20. Die Datenverarbeitungsvorrichtung 20 ist ausgebildet, um die Information über die Messkonfiguration zur Messung der Signale des Mobilfunksystems 30 bereitzustellen. Die Datenverarbeitungsvorrichtung 20 umfasst eine Schnittstelle 22 zur Kommunikation mit dem Sendeempfänger 10 für das Mobilfunksystem 30. Darüber hinaus umfasst die Datenverarbeitungsvorrichtung 20 eine Kontrolleinrichtung 24 zur Bestimmung der Information über die Messkonfiguration für den Sendeempfänger 10. Die Schnittstelle 22 ist ferner ausgebildet, um dem Sendeempfänger 10 die Information über die Messkonfiguration bereitzustellen.

Wie die Fig. 1 zeigt, ist die zweite Schnittstelle 14 des Sendeempfängers 10 mit der Schnittstelle 22 der Datenverarbeitungsvorrichtung 20 verbunden. Es wird in diesem Ausführungsbeispiel demnach von einer leitungsgebundenen Kommunikation ausgegangen.

Wie die Fig. 1 weiter zeigt, ist die Kontrolleinrichtung 24 mit der Schnittstelle 22 gekoppelt.

In dem in der Fig. 1 gezeigten Ausführungsbeispiel des Sendeempfängers 10 ist die zweite Schnittstelle 14 ferner ausgebildet, um auf Anfrage der Datenverarbeitungsvorrichtung 20 Daten von der Datenverarbeitungsvorrichtung 20 zu empfangen und über die erste Schnittstelle 12 an das Mobilfunknetz zu senden. Die Schnittstelle 22 ist ferner ausgebildet, um eine Information über ein Messergebnis von dem Sendeempfänger 10 zu erhalten und um dem Sendeempfänger 10 Daten zur Weiterleitung an das Mobilfunknetz 30 bereitzustellen. Die Kontrolleinrichtung 24 ist ferner ausgebildet, um die Information über das Messergebnis auszuwerten und festzustellen, ob ein Qualitätskriterium über eine Kommunikation zwischen dem Sendeempfänger 10 und dem Mobilfunksystem 30 erfüllt ist, wobei die Kontrolleinrichtung 24 ferner ausgebildet ist, um dem Sendeempfänger 10 die Daten zur Weiterleitung bereitzustellen, wenn das Qualitätskriterium erfüllt ist.

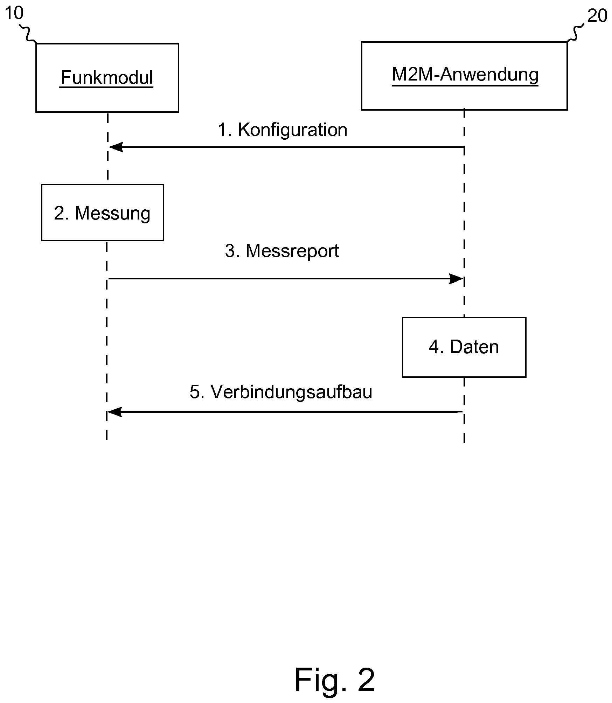

Die Fig. 2 illustriert einen Ablauf einer Kommunikation zwischen dem Sendeempfänger 10 und der Datenverarbeitungsvorrichtung 20 in einem Ausführungsbeispiel. Die Fig. 2 illustriert auf der linken Seite den Sendeempfänger 10, der vorliegend als Funkmodul realisiert ist. Auf der rechten Seite ist die Datenverarbeitungsvorrichtung 20 gezeigt, die vorliegend als M2M-Anwendung 20 realisiert ist. Als M2M-Anwendungen kommen beispielsweise Metering-Anwendungen in Verbrauchszählern, beispielsweise für Strom, Gas, Wasser, usw., in Frage. Darüber hinaus können M2M-Anwendungen Statusmeldungen stationärer Einrichtungen, wie beispielsweise Verkaufsautomaten, Maschinen, Heizungen, usw., umfassen.

Die Kommunikation, d. h. der Austausch von Informationen zwischen dem Funkmodul 10 und der M2M-Anwendung 20 ist in der Fig. 2 durch Pfeile angedeutet. In einem ersten Schritt wird die Messkonfiguration von der M2M-Anwendung 20 an das Funkmodul 10 geschickt. Die M2M-Anwendung 20 konfiguriert die Messung, welche in dem Funkmodul 10 intern durchgeführt wird. In dem vorliegenden Ausführungsbeispiel beinhaltet die Messkonfiguration einerseits, welche Messgröße zur Beurteilung der Signalqualität verwendet wird, z. B. Empfangspegel oder Signal-zu-Rausch-Verhältnis. Andererseits umfasst die Messkonfiguration hier auch die Festlegung der Ereignisse, wann eine Meldung zur Anwendung 20 versendet werden soll, z. B. periodisch mit Angabe einer Periode bzw. wenn bestimmte Messereignisse, wie beispielsweise wenn ein Messwert über- bzw. unterhalb einer Schwelle liegt, eintreten. Darüber hinaus kann die Messkonfiguration auch weiterhin Information für eine Vorverarbeitung, wie z. B. eine Filterung, der Messwerte enthalten.

In anderen Worten beinhaltet die Messkonfiguration im vorliegenden Beispiel auch eine Information über die Art der Bereitstellung, wobei die Information über die Art der Bereitstellung angibt, ob eine Bereitstellung basierend auf einem zeitlichen Ablauf oder basierend auf einem Messereignis erfolgt. Vorliegend wird davon ausgegangen, dass eine ereignisbasierte Berichterstattung konfiguriert wird, sodass das Funkmodul 10 einen Messreport an die M2M-Anwendung 20 schickt, sobald ein gemessener Empfangspegel über einer Schwelle liegt. Generell können in Ausführungsbeispielen verschiedene Möglichkeiten genutzt werden, um Messkonfigurationen an einem Sendeempfänger 10 durchzuführen. Beispielsweise können standardisierte Möglichkeiten genutzt werden, welche beispielsweise durch den 3GPP-Standard zur Messung vorgesehen sind. Diese sind beispielsweise die Technische Spezifikation (TS) 25.331 im Falle eines UMTS-Netzes oder TS36.331 im Falle eines LTE-Netzes.

Wie die Fig. 2 zeigt, führt das Funkmodul 10 dann eine interne Messung durch, die auf der empfangenen Konfiguration basiert. Beim Erreichen des konfigurierten Messereignisses wird eine Meldung in Form eines Messreports an die M2M-Anwendung versendet. Dieser Messreport beinhaltet die Information über das Messergebnis. Der Messreport kann den Messwert selbst sowie eine Information über das eingetretene Ereignis enthalten, welches den Messreport ausgelöst hat. Die M2M-Anwendung 20 speichert diese Information zur späteren Verwendung. Fig. 2 illustriert ferner, dass die M2M-Anwendung 20 nun eine interne Datenverarbeitung durchführt, beispielsweise Daten zum Versenden vorbereitet. Wenn M2M Daten vorliegen, kann die M2M-Anwendung 20 die gespeicherte Messinformation überprüfen, wobei hier in Ausführungsbeispielen zeitliche Restriktionen vorliegen können, die verhindern, dass eine veraltete Messinformation verwendet wird. Schließlich kann die M2M-Anwendung 20 einen Verbindungsaufbau starten, sofern die Signalqualität ein bestimmtes Sendekriterium, wie beispielsweise, dass die Qualität der Signale besser als ein bestimmter Schwellwert war, erfüllt. Sollte dies nicht der Fall sein, so kann auf einen neuen Messreport gewartet werden und das Sendekriterium erneut überprüft werden. In anderen Ausführungsbeispielen kann das Messereignis auch gleich so gewählt werden, dass ein Messreport nur empfangen wird, wenn die Qualität besser als ein Schwellwert ist, d. h. wenn eine Übertragung prinzipiell möglich ist. In anderen Worten ist die Kontrolleinrichtung 24 ausgebildet, um die Bereitstellung der Daten an den Sendeempfänger 10 bei nicht erfülltem Qualitätskriterium zurückzustellen, bis das Qualitätskriterium erfüllt ist.

Sofern also die entsprechende Sendebedingung gegeben ist, kann die M2M-Anwendung 20 den Aufbau der Funkverbindung über das Funkmodul 10 initiieren und die Datenübertragung starten. Hierfür können beispielsweise Standardprozeduren verwendet werden, welche von den jeweiligen Mobilfunkstandards vorgegeben sind.

In dem oben betrachteten Ausführungsbeispiel wird eine M2M-Anwendung betrachtet, die speziell für weniger zeitkritische M2M-Daten geeignet ist, welche demnach bei ihrer Aussendung auch verzögert werden können. Für zeitkritischere M2M-Anwendungen kann z. B. ein zusätzlicher Timer in der Datenverarbeitungsvorrichtung 20 vorgesehen werden, welcher nach Ablauf einer gewissen Zeit einen Verbindungsaufbau initiiert, unabhängig vom Status der Signalqualität.

Ausführungsbeispiele der vorliegenden Erfindung können den Vorteil bieten, dass Verbindungen in dem Mobilfunksystem nur dann aufgebaut werden, wenn eine Datenübertragung zuvor durch Auswerten entsprechender Messungen auch verifiziert wurde. Dies hat den Vorteil, dass keine Funkressourcen in dem Mobilfunksystem gebunden werden, wenn eine Datenübertragung von vornherein nicht möglich oder nur unter Verwendung hoher Ressourcen möglich ist. Dabei kann eine direkte Kommunikation zwischen dem Funkmodul und der M2M-Anwendung verwendet werden. Ausführungsbeispiele können ferner den Vorteil bieten, dass interne Messungen, welche ein Funkmodul ohnehin bereitstellt, auch von der M2M-Anwendung genutzt werden können. Darüber hinaus kann die Auswertung dieser Messung durch die M2M-Anwendung erfolgen und die M2M-Anwendung kann dann selbstständig entscheiden, ob Daten versendet werden sollen. Dies wird durch die Einführung der Schnittstelle zwischen dem Funkmodul und der M2M-Anwendung zur Konfiguration und Bereitstellung der Messwerte ermöglicht.

Darüber hinaus können Ausführungsbeispiele den Vorteil bieten, dass bereits standardisierte Datenformate, insbesondere hinsichtlich der Messkonfigurationen, verwendet werden können. Interne Messungen bzw. Messereignisse können dann ausgenutzt werden, wobei diese Messungen und Messereignisse bereits beispielsweise durch 3GPP standardisiert wurden. Ausführungsbeispiele können somit eine verbesserte Effizienz der M2M-Datenübertragung schaffen, da ein Kommunikationsversuch nur noch erfolgt, wenn eine ausreichende Signalqualität am Standort vorherrscht. Weiterhin kann das Funkmodul von nutzlosen Übertragungsversuchen bei schlechter Qualität entlastet werden. Durch Einstellen eines Timers können Ausführungsbeispiele darüber hinaus ermöglichen, einen Abtausch zwischen erhöhter Übertragungseffizienz und Echtzeitanforderungen der übertragenen Daten einzustellen.

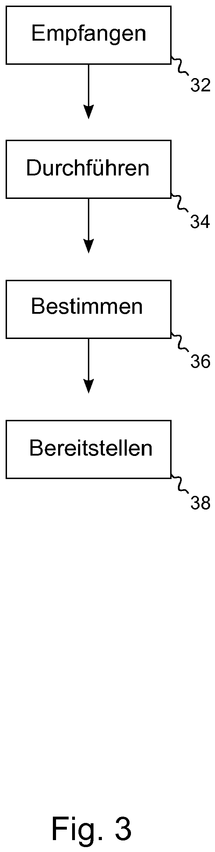

Fig. 3 illustriert ein Blockschaltbild eines Ablaufdiagramms eines Verfahrens zum Bereitstellen von Messinformation aus einem Mobilfunksystem 30. Das Verfahren umfasst ein Empfangen 32 einer Information über eine Messkonfiguration von einer Datenverarbeitungseinrichtung 20 und ein Durchführen 34 einer Messung in dem Mobilfunksystem 30 basierend auf der Information über die Messkonfiguration. Das Verfahren umfasst ferner ein Bestimmen 36 der Messinformation basierend auf der Messung und ein Bereitstellen 38 der Messinformation an die Datenverarbeitungseinrichtung 20.

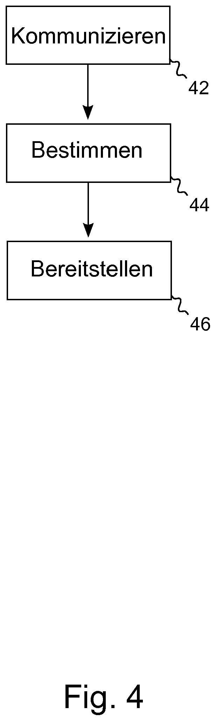

Die Fig. 4 illustriert ein Blockschaltbild eines Ablaufdiagramms eines Ausführungsbeispiels eines Verfahrens zum Bereitstellen einer Information über eine Messkonfiguration zur Messung von Signalen in einem Mobilfunksystem 30. Das Verfahren umfasst ein Kommunizieren 42 mit einem Sendeempfänger 10 für das Mobilfunksystem 30 und ein Bestimmen 44 einer Information über eine Messkonfiguration für den Sendeempfänger 10. Das Verfahren umfasst ferner einen Schritt des Bereitstellens 46 der Information über die Messkonfiguration an den Sendeempfänger 10.

Ausführungsbeispiele umfassen auch ein Computerprogramm mit einem Programmcode zur Durchführung eines der oben beschriebenen Verfahren, wenn der Programmcode auf einem Computer, einem Prozessor oder einer programmierbaren Hardwarekomponente ausgeführt wird.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Sendeempfänger (10) zum Bereitstellen von Messinformation aus einem Mobilfunksystem (30), mit
einer ersten Schnittstelle (12) zur Kommunikation mit dem Mobilfunksystem (30); einer zweiten Schnittstelle (14) zur Kommunikation von Maschine-zu-Maschine Daten mit einer Datenverarbeitungseinrichtung (20) und zum Empfang einer Information über eine Messkonfiguration von der Datenverarbeitungseinrichtung (20); und
einer Messeinrichtung (16) zum Durchführen einer Messung in dem Mobilfunksystem (30) basierend auf der Information über die Messkonfiguration und zum Bestimmen der Messinformation basierend auf der Messung,
wobei die zweite Schnittstelle (14) ferner ausgebildet ist, um der Datenverarbeitungseinrichtung (20) die Messinformation bereitzustellen, wobei die zweite Schnittstelle (14) ferner ausgebildet ist, um auf Anfrage der Datenverarbeitungseinrichtung (20) Daten von der Datenverarbeitungseinrichtung (20) zu empfangen und über die erste Schnittstelle (12) an das Mobilfunknetz zu senden.

2. Sendeempfänger (10) gemäß einem der vorangehenden Ansprüche, wobei die Information über die Messkonfiguration ferner Information über eine Art der Bereitstellung der Messinformation umfasst, wobei die Information über die Art der Bereitstellung angibt, ob eine Bereitstellung basierend auf einem Zeitablauf oder basierend auf einem Messereignis erfolgt und wobei die erste Schnittstelle (12) ausgebildet ist, um von dem Mobilfunksystem (30) eine Information über eine weitere Messkonfiguration zu erhalten und wobei die Messeinrichtung (16) angepasst ist, um basierend auf der Information über die weitere Messkonfiguration eine Messung in dem Mobilfunknetz durchzuführen.

3. Sendeempfänger (10) gemäß einem der vorangehenden Ansprüche, wobei die erste Schnittstelle (12) angepasst ist, um mit dem Mobilfunknetz Daten nach einem Standard gemäß dem General Packet Radio Service (GPRS), Universal Mobile Telecommunication System (UMTS), Long Term Evolution (LTE), oder LTE-Advanced (LTE-A) auszutauschen.

4. Datenverarbeitungsvorrichtung (20) zum Bereitstellen einer Information über eine Messkonfiguration zur Messung von Signalen eines Mobilfunksystems (30), mit
einer Schnittstelle (22) zur Kommunikation von Maschine-zu-Maschine Daten mit einem Sendeempfänger (10) für das Mobilfunksystem (30); und
einer Kontrolleinrichtung (24) zur Bestimmung einer Information über eine Messkonfiguration für den Sendeempfänger (10);
wobei die Schnittstelle (22) ferner ausgebildet ist, um dem Sendempfänger (10) die Information über die Messkonfiguration bereitzustellen, wobei die Schnittstelle (22) ausgebildet ist, um eine Information über ein Messergebnis von dem Sendeempfänger (10) zu erhalten und um dem Sendeempfänger (10) Daten zur Weiterleitung an das Mobilfunknetz (30) bereitzustellen, wobei die Kontrolleinrichtung (24) ausgebildet ist, um die Information über das Messergebnis auszuwerten und festzustellen, ob ein Qualitätskriterium für eine Kommunikation zwischen dem Sendeempfänger (10) und dem Mobilfunksystem (30) erfüllt ist, wobei die Kontrolleinrichtung (24) ferner ausgebildet ist, um dem Sendeempfänger (10) die Daten zur Weiterleitung bereitzustellen, wenn das Qualitätskriterium erfüllt ist.

5. Datenverarbeitungsvorrichtung (20) gemäß Anspruch 4, wobei die Kontrolleinrichtung (24) ausgebildet ist, um die Bereitstellung der Daten an den Sendeempfänger (10) bei nicht erfülltem Qualitätskriterium zurückzustellen, bis das Qualitätskriterium erfüllt ist und wobei die Information über die Messkonfiguration ferner Information über eine Art der Bereitstellung der Messinformation umfasst, wobei die Information über die Art der Bereitstellung angibt, ob eine Bereitstellung basierend auf einem Zeitablauf oder basierend auf einem Messereignis erfolgt und wobei die Datenverarbeitungseinrichtung (20) ferner einen Verbrauchszähler, einen Verkaufsautomaten oder eine fernwartbare Maschine zur Bereitstellung der Daten zur Weiterleitung an das Mobilfunksystem umfasst.

6. Verfahren zum Bereitstellen von Messinformation aus einem Mobilfunksystem (30), mit
Empfangen (32) einer Information über eine Messkonfiguration von einer Datenverarbeitungseinrichtung (20) und Kommunizieren von Maschine-zu-Maschine Daten mit der Datenverarbeitungseinrichtung (20);
Durchführen (34) einer Messung in dem Mobilfunksystem (30) basierend auf der Information über die Messkonfiguration;
Bestimmen (36) der Messinformation basierend auf der Messung;
Bereitstellen (38) der Messinformation an die Datenverarbeitungseinrichtung (20); und
auf Anfrage der Datenverarbeitungseinrichtung (20) Empfangen von Daten von der Datenverarbeitungseinrichtung (20) und Senden der Daten an das Mobilfunknetz.

7. Verfahren zum Bereitstellen einer Information über eine Messkonfiguration zur Messung von Signalen eines Mobilfunksystems (30), mit
Kommunizieren (42) von Maschine-zu-Maschine Daten mit einem Sendeempfänger (10) für das Mobilfunksystem (30);
Bestimmen (44) einer Information über eine Messkonfiguration für einen Sendeempfänger (10);
Bereitstellen (46) der Information über die Messkonfiguration an den Sendeempfänger (10);
Erhalten einer Information über ein Messergebnis von dem Sendeempfänger (10);
Auswerten der Information über das Messergebnis und Feststellen, ob ein Qualitätskriterium für eine Kommunikation zwischen dem Sendeempfänger (10) und dem Mobilfunksystem (30) erfüllt ist; und
Bereitstellen von Daten an den Sendeempfänger (10) zur Weiterleitung an das Mobilfunknetz (30), wenn das Qualitätskriterium erfüllt ist.

8. Computerprogramm mit einem Programmcode zur Durchführung eines der Verfahren gemäß den Ansprüchen 6 oder 7, wenn der Programmcode auf einem Computer, einem Prozessor oder einer programmierbaren Hardwarekomponente ausgeführt wird.

## Claims

1. A transceiver (10) for providing measurement information from a mobile radio system (30), comprising
a first interface (12) for communicating with the mobile radio system (30);
a second interface (14) for communicating machine-to-machine data with a data processing device (20) and for receiving information on a measurement configuration from the data processing device (20); and
a measurement device (16) for executing a measurement in the mobile radio system (30) based on the information on the measurement configuration and for determining the measurement information based on the measurement,
wherein the second interface (14) is further configured to provide the measurement information to the data processing device (20), wherein the second interface (14) is further configured, upon a request from the data processing device (20), to receive data from the data processing device (20) and transmit the same to the mobile radio network via the first interface (12).

2. The transceiver (10) according to any of the preceding claims, wherein the information on the measurement configuration further includes information on a way of providing the measurement information, wherein the information on the way of providing indicates, whether providing is executed based on a course of time or based on a measurement event and wherein the first interface (12) is configured to receive information on a further measurement configuration from the mobile radio system (30) and wherein the measurement device (16) is adapted to execute a measurement in the mobile radio network based on the information on the further measurement configuration.

3. The transceiver (10) according to any of the preceding claims, wherein the first interface (12) is adapted to exchange data with the mobile radio network according to a standard according to the General Packet Radio Service (GPRS), Universal Mobile Telecommunication System (UMTS), Long Term Evolution (LTE), or LTE-Advanced (LTE-A).

4. A data processing device (20) for providing information on a measurement configuration for measuring signals of a mobile radio system (30), comprising
an interface (22) for a communication of machine-to-machine data with a transceiver (10) for the mobile radio system (30); and
a control device (24) for determining information on a measurement configuration for the transceiver (10);
wherein the interface (22) is further configured to provide the information on the measurement configuration to the transceiver (10), wherein the interface (22) is configured to receive information on a measurement result from the transceiver (10) and to provide data for transfer to the mobile radio network (30) to the transceiver (10), wherein the control device (24) is configured to evaluate the information on the measurement result and to determine, whether a quality criterion for a communication between the transceiver (10) and the mobile radio system (30) is fulfilled, wherein the control device (24) is further configured to provide the data for transfer to the transceiver (10) when the quality criterion is fulfilled.

5. The data processing device (20) according to claim 4, wherein the control device (24) is configured to postpone providing the data to the transceiver (10) if the quality criterion is not fulfilled until the quality criterion is fulfilled and wherein the information on the measurement configuration further comprises information on a way of providing the measurement information, wherein the information on the way of providing indicates, whether a provision is based on a course of time or based on a measurement event and whether the data processing device (20) further comprises a consumption meter, a vending machine or a remotely serviceable machine for providing data for a transfer to the mobile radio system.

6. A method (10) for providing measurement information from a mobile radio system (30), comprising
receiving (32) information on a measurement configuration from a data processing device (20) and communicating machine-to-machine data with the data processing device (20);
executing (34) a measurement in the mobile radio system (30) based on the information on the measurement configuration;
determining (36) the measurement information based on the measurement;
providing (38) the measurement information to the data processing device (20); and
upon request from the data processing device (20), receiving data from the data processing device (20) and transmitting the data to the mobile radio network.

7. A method (20) for providing information on a measurement configuration for measuring signals of a mobile radio system (30), comprising
communicating (42) machine-to-machine data with a transceiver (10) for the mobile radio system (30);
determining (44) information on a measurement configuration for a transceiver (10);
providing (46) the information on the measurement configuration to the transceiver (10);
receiving information on a measurement result from the transceiver (10);
evaluating the information on the measurement result and determining whether a quality criterion for a communication between the transceiver (10) and the mobile radio system (30) is fulfilled; and
providing data to the transceiver (10) for a transfer to the mobile radio network (30) when the quality criterion is fulfilled.

8. A computer program having a program code for executing one of the methods according to claims 6 or 7, when the program code is executed on a computer, a processor, or a programmable hardware component.

## Revendications

1. Émetteur-récepteur (10) destiné à fournir des informations de mesure provenant d'un système radio mobile (30), comportant
une première interface (12) destinée à communiquer avec le système radio mobile (30) ;
une deuxième interface (14) destinée à la communication de données de machine à machine avec un dispositif de traitement de données (20) et à la réception d'une information relative à une configuration de mesure provenant du dispositif de traitement de données (20) ; et
un dispositif de mesure (16) destiné à effectuer une mesure dans le système radio mobile (30) sur la base de l'information relative à la configuration de mesure et à déterminer l'information de mesure sur la base de la mesure,
dans lequel la deuxième interface (14) est en outre configurée pour fournir au dispositif de traitement de données (20) les informations de mesure,
dans lequel la deuxième interface (14) est en outre configurée pour recevoir des données du dispositif de traitement de données (20) à la demande du dispositif de traitement de données (20) et pour les envoyer au réseau radio mobile par l'intermédiaire de la première interface (12) .

2. Émetteur-récepteur (10) selon l'une quelconque des revendications précédentes, dans lequel l'information relative à la configuration de mesure comprend en outre des informations relatives à un mode de fourniture de l'information de mesure, dans lequel l'information relative au mode de fourniture indique si une fourniture est effectuée sur la base d'un temps écoulé ou d'un événement de mesure, et dans lequel la première interface (12) est conçue pour recevoir une information relative à une configuration de mesure supplémentaire du système radio mobile (30) et dans lequel le dispositif de mesure (16) est conçu pour effectuer une mesure dans le réseau radio mobile sur la base de l'information relative à la configuration de mesure supplémentaire.

3. Émetteur-récepteur (10) selon l'une quelconque des revendications précédentes, dans lequel la première interface (12) est adaptée pour échanger des données avec le réseau radio mobile selon une norme conforme au General Packet Radio Service (GPRS), à la norme Universal Mobile Telecommunication System (UMTS), à la norme Long Term Evolution (LTE) ou LTEA-advanced (LTE-A).

4. Dispositif de traitement de données (20) destiné à fournir une information relative à une configuration de mesure destinée à mesurer des signaux provenant d'un système radio mobile (30), comprenant
une interface (22) destinée à la communication de données de machine à machine avec un émetteur-récepteur (10) destiné au système radio mobile (30) ; et
un dispositif de commande (24) destiné à déterminer une information relative à une configuration de mesure destinée à l'émetteur-récepteur (10) ;
dans lequel l'interface (22) est en outre conçue pour fournir à l'émetteur-récepteur (10) l'information relative à la configuration de mesure, dans lequel l'interface (22) est configurée pour obtenir une information relative à un résultat de mesure en provenance de l'émetteur-récepteur (10) et pour fournir à l'émetteur-récepteur (10) des données destinées à être transmises au réseau radio mobile (30), dans lequel le dispositif de commande (24) est conçu pour évaluer l'information relative au résultat de la mesure et pour déterminer si un critère de qualité pour la communication entre l'émetteur-récepteur (10) et le système radio mobile (30) est satisfait, dans lequel le dispositif de commande (24) est en outre configuré pour fournir à l'émetteur-récepteur (10) les données à transmettre lorsque le critère de qualité est satisfait.

5. Dispositif de traitement de données (20) selon la revendication 4, dans lequel le moyen de commande (24) est conçu pour réinitialiser la fourniture des données à l'émetteur-récepteur (10) dans le cas où un critère de qualité n'est pas satisfait, jusqu'à ce que le critère de qualité soit satisfait, et dans lequel l'information relative à la configuration de mesure comprend en outre des informations relatives à un mode de fourniture de l'information de mesure, dans lequel l'information relative au mode de fourniture indique si une fourniture est effectuée sur la base d'un temps écoulé ou sur la base d'un événement de mesure, et dans lequel le moyen de traitement de données (20) comprend en outre un compteur de consommation, un distributeur automatique ou un appareil de télémaintenance destiné à fournir les données à transmettre au système radio mobile.

6. Procédé de fourniture d'informations de mesure provenant d'un système radio mobile (30), comprenant la réception (32) d'une information relative à une configuration de mesure d'un dispositif de traitement de données (20) et la communication de données de machine à machine avec le dispositif de traitement de données (20) ;
l'exécution (34) d'une mesure dans le système radio mobile (30) sur la base de l'information relative à la configuration de mesure ;
la détermination (36) de l'information de mesure sur la base de la mesure ;
la fourniture (38) de l'information de mesure au dispositif de traitement de données (20) ; et,
à la demande du dispositif de traitement de données (20), la réception de données en provenance du dispositif de traitement de données (20) et la transmission des données au réseau radio mobile.

7. Procédé de fourniture d'une information relative à une configuration de mesure pour la mesure de signaux provenant d'un système radio mobile (30), comprenant la communication (42) de données de machine à machine avec un émetteur-récepteur (10) destiné au système radio mobile (30) ;
la détermination (44) d'une information relative à une configuration de mesure pour un émetteur-récepteur (10) ; la fourniture (46) de l'information relative à la configuration de mesure à l'émetteur-récepteur (10) ;
l'obtention de l'information relative à un résultat de mesure en provenance de l'émetteur-récepteur (10) ;
l'évaluation de l'information relative au résultat de mesure et la détermination du fait de savoir si un critère de qualité pour la communication entre l'émetteur-récepteur (10) et le système radio mobile (30) est satisfait ; et
la fourniture de données à l'émetteur-récepteur (10) à transmettre au réseau mobile (30) lorsque le critère de qualité est satisfait.

8. Programme d'ordinateur comportant un code de programme destiné à la mise en oeuvre de l'un des procédés selon les revendications 6 ou 7 lorsque le code de programme est exécuté sur un ordinateur, un processeur ou un composant matériel programmable.
